Europäisches Patentamt

European Patent Office

Office européen des brevets

(19)

(11) Veröffentlichungsnummer : **0 111 678**
**B1**

(12) EUROPÄISCHE PATENTSCHRIFT

(45) Veröffentlichungstag der Patentschrift :
11.01.89

(21) Anmeldenummer : 83110457.5

(22) Anmeldetag : 20.10.83

(51) Int. Cl.⁴ : **B 29 C 47/04**, B 29 C 47/14

(54) **Verfahren und Vorrichtung zum Herstellen einer einen Farbstreifen mit unterschiedlicher Farbintensität aufweisenden Kunststoffolie.**

(30) Priorität : 27.10.82 DE 3239782

(43) Veröffentlichungstag der Anmeldung :
27.06.84 Patentblatt 84/26

(45) Bekanntmachung des Hinweises auf die Patenterteilung : 11.01.89 Patentblatt 89/02

(84) Benannte Vertragsstaaten :
**AT BE CH DE FR GB IT LI LU NL SE**

(56) Entgegenhaltungen :
EP--A-- 0 010 895
EP--A-- 0 052 491
EP--A-- 0 073 347
DE--A-- 2 622 289
DE--A-- 3 010 691
DE--C-- 2 035 578
US--A-- 4 137 027

(73) Patentinhaber : **Hüls Troisdorf Aktiengesellschaft**
**Postfach 11 65**
**D-5210 Troisdorf (DE)**

(72) Erfinder : **Pabst, Horst**
**Eisenachstrasse 80**
**D-5205 St. Augustin (DE)**

Jouve, 18, rue St-Denis, 75001 Paris, France

## Beschreibung

Die Erfindung betrifft ein Verfahren zur Extrusion einer einen Farbstreifen mit unterschiedlicher Farbintensität aufweisenden Folie gemäß dem Oberbegriff des Anspruchs 1 sowie eine Vorrichtung zur Durchführung dieses Verfahrens.

Die Vorrichtung zum Herstellen einer einen Farbstreifen enthaltenden Folie geht aus von einem Extruder zum Aufschmelzen eines Stromes eines thermoplastischen Kunststoffes und einem Breitschlitzwerkzeug mit einem Verteilerkanal mit vorgelagertem Drosselfeld, Staubalken, einer aus Oberlippe und Unterlippe gebildeten Vorlaufzone mit Düsenaustrittsspalt zum Formen der Folie, wobei das Breitschlitzwerkzeug noch eine Einspritzöffnung für einen weiteren thermoplastischen Teilschmelzestrom aufweist.

Aus der DE-C-20 35 578 ist ein Verfahren zum Herstellen einer einen Farbstreifen mit unterschiedlicher Farbintensität aufweisenden Folie gemäß dem Oberbegriff des Anspruchs 1 sowie eine Vorrichtung gemäß dem Oberbegriff des Anspruchs 4 bekannt. Bei diesem Verfahren wird der Strom gefärbten Kunststoffes zu einem Zeitpunkt eingespritzt, bei dem sich der Hauptstrom noch in Querrichtung ausbreitet. Das Einspritzen des gefärbten Schmelzestromes erfolgt dabei im Bereich des Verteilerkanals, wodurch der gefärbte Schmelzestrom ebenfalls noch in Querrichtung zur Extrusionsrichtung mit ausgebreitet und verteilt wird.

Ein ähnliches Verfahren und Vorrichtung ist aus der EP-A2-0 052 491 bekannt, bei dem eine gefärbte Schmelze zur Bildung eines Farbstreifens in einen farblosen Schmelzestrom in der Weise eingespritzt wird, daß der Farbstreifen völlig in die farblose Schmelze eingelagert wird. Hierzu ist eine torpedoförmige Sonde vorgesehen, die innerhalb des Extrusionskanals angeordnet ist und allseitig von der farblosen Schmelze umflossen wird.

Beim Herstellen von in Teilbereichen gefärbten durchsichtigen Folien, wie sie beispielsweise als Zwischenfolien für Sicherheitsglas für Kraftfahrzeuge benutzt werden, wird ein genau definierter und dimensionierter Übergangsbereich von einem farblosen Teil in einen gefärbten Teil mit kontinuierlichen Übergang der Farbintensität gefordert, wobei solche Folien in gleicher Qualität reproduzierbar herstellbar sein sollen. Ein Nachteil des Verfahrens nach der DE-C-20 35 578 ist darin zu sehen, daß es sehr schwierig ist, den gewünschten Farbstreifen in Querschnitt, Ausbreitung, Dimensionierung und Farbintensität exakt zu steuern, da die gefärbte Masse im Verteilerkanal eingespritzt wird und noch nachfolgend einer Ausbreitung quer zur Extrusionsrichtung unterliegt. Ebenso ist es mit dem Verfahren und der Vorrichtung nach der EP-A2-0 052 491 schwierig, die gewünschte exakte Dimensionierung und den Verlauf des Farbgradienten einzuhalten, da die gefärbte Schmelze innerhalb eines Stromes farbloser Masse unter Verdrängung desselben allseitig eingespritzt wird und hierbei bereits geringe Schwankungen in den Druckverhältnissen zu unterschiedlichen Farbstreifen in der Intensität und Dimensionierung führen. Druckschwankungen sind jedoch von Seiten des Extruders nicht ganz zu vermeiden, die jedoch mit dem Verfahren und der Vorrichtung nach der EP-A2-0 052 491 bezüglich der Lage des Farbstreifens nicht ausgeglichen werden können.

Aus der nicht vorveröffentlichten EP-A1-0 073 347 ist bereits ein gattungsgemäßes Verfahrens bekannt, bei dem mittels eine Sonde mit im Querschnitt auslaufender Nut ein gefärbter Zusatzschmelzestrom in den Hauptschmelzestrom eingespritzt wird, so daß ein Farbkeil mit einem Anstiegswinkel von etwa 5 bis 30° erzeugt wird. Nach diesem Verfahren tritt der gefärbte Zusatzstrom in Richtung des Hauptschmelzestromes aus der Sonde aus. Weiterhin ist aus der EP-A1-0 073 347 eine Vorrichtung gemäß dem Oberbegriff des Anspruchs 5 bekannt.

Der Erfindung liegt die Aufgabe zugrunde, ein Verfahren und eine Vorrichtung zu schaffen, mit der es möglich ist, auf einfache Weise reproduzierbar in gleicher Qualität Folien mit einem Farbstreifen mit unterschiedlicher Farbintensität herzustellen, wie sie beispielsweise als gefärbte Sicherheitsglasfolien aus Polyvinylbutyral bekannt sind.

Die Aufgabe wird bei einem gattungsgemäßen Verfahren durch die kennzeichnenden Merkmale des Anspruchs 1 gelöst.

Nach einem bevorzugten Verfahren gemäß Anspruch 2 wird eine breite Folie hergestellt, die einen Bereich ungefärbter Folie und einen Bereich vollständig durchgefärbter Folie mittels eines Übergangsbereiches aus gefärbter und ungefärbter Schmelze in Gestalt eines Farbkeilstreifens aufweist. Hierbei wird der Übergangsbereich, in dem ein gefärbter Schmelzestrom mit unterschiedlichem Querschnitt und entsprechend unterschiedlicher Farbintensität durch Verdrängung des farblosen Schmelzestromes von einer Seite her eingelagert wird, ebenfalls mittels einer Breitschlitzdüse hergestellt. Die Breitschlitzdüse ermöglicht entsprechend der Länge bzw. Breite des Düsenaustrittsspaltes einen entsprechend im Querschnitt dimensionierten, exakten, gefärbten Bereich herzustellen, wobei durch die Gestalt der Breitschlitzdüse die gleiche Austrittsgeschwindigkeit der gefärbten Schmelze über die ganze Breite des gewünschten Farbstreifens auch bei unterschiedlicher Dicke desselben ermöglicht ist. Damit ist die gewünschte exakte Steuerung des Farbstreifens möglich.

Der grundsätzliche Aufbau eines Breitschlitzwerkzeuges ist beispielsweise in dem Kunststoff-Maschinenführer, Carl Hanser Verlag München, Wien 1979, Seite 95 bis 98 beschrieben. Gemäß der Erfindung weist eine Vorrichtung zum Herstellen einer einen Farbstreifen (als Randstreifen) enthaltenden Folie einen Extruder zum Aufschmelzen eines Stromes eines thermoplastischen Kunststoffes und ein Breitschlitzwerkzeug mit einem Verteilerkanal und einer zwischen einer Oberlippe und einer Unterlippe gebildeten Düsenaustrittzone mit Düsenaustrittsspalt zum Formen der Folie vor, wobei das Breitschlitzwerkzeug noch eine Einspritzöffnung für einen weiteren thermoplastischen Teilschmelzestrom aufweist, wobei ferner die Einspritzöffnung als in Extrusionsrichtung betrachtet an der Vorderseite eines nach dem Verteilerkanal mit einem nachfolgenden Drosselfeld vorgesehenen Staubalken des Breitschlitzwerkzeuges angeordnete kleine Breitschlitzdüse ausgebildet ist, die vom Staubalken und einer davor befestigten Düsenplatte mit einem quer zur Extrusionsrichtung entlang der vorderen Kante des Staubalkens verlaufender Düsenaustrittsspalt gebildet wird (Anspruch 4).

Nach einer bevorzugten Weiterbildung der Erfindung wird eine Vorrichtung vorgeschlagen (Anspruch 5) mit zwei, untereinander verbundenen Breitschlitzwerkzeugen, wobei dem einen Breitschlitzwerkzeug eine farbige und dem anderen Breitschlitzwerkzeug eine ungefärbte Kunststoffschmelze zuführbar ist. Jedes Breitschlitzwerkzeug weist dabei einen Anschluß für die Zufuhr der Kunststoffschmelze, einen Verteilerkanal, ggf. einen Staubalken und einen gemeinsamen, verstellbaren Düsenaustrittsspalt auf. Weiterhin ist eine Einrichtung zum Einspritzen eines Teils der einen Kunststoffschmelze in den Strom der anderen Kunststoffschmelze vorgesehen, wobei das Einspritzen an einer Stelle erfolgt, an der sich die Schmelzeströme bereits vollständig in Richtung quer zur Extrusionsrichtung ausgebreitet haben.

Die Einspritzeinrichtung ist erfindungsgemäß als zusätzliche, kleinere Breitschlitzdüse ausgebildet, mit einem sich keilförmig über seine Länge verengenden Austrittsspalt, wobei die zusätzliche Breitschlitzdüse so angeordnet ist, daß der Austrittsspalt der zusätzlichen Breitschlitzdüse quer zur Extrusionsrichtung ausgerichtet ist und sich keilförmig in den Fluß des einen Schmelzestromes und senkrecht zu dessen Flußrichtung erstreckt.

Eine vorteilhafte Weiterbildung der Erfindung sieht vor, daß der Staubalken des großen Breitschlitzwerkzeuges eine Einspeisebohrung mit einer Verbindungsbohrung zur Breitschlitzdüse für den Teilschmelzestrom aufweist. Je nach Gestalt der Breitschlitzdüse kann diese asymmetrisch oder symmetrisch gespeist werden, dies richtet sich auch nach der Ausbildung des Düsenaustrittsspaltes und des gewünschten Querschnittes.

Eine bevorzugte Ausbildung der Breitschlitzdüse sieht vor, daß diese einseitig in eine Düsenplatte mit einem Verteilerkanal, einem Damm und einem Düsenaustrittsspalt eingearbeitet ist. Diese Verteilerplatte wird dann an die Vorderkante des Staubalkens angesetzt und bildet mit diesem zusammen in dem ausgearbeiteten Bereich den Fließkanal für den Teilschmelzestrom.

Zur Erzielung eines im Querschnitt keilförmigen Farbstreifens ist erfindungsgemäß vorgesehen, daß der Düsenaustrittsspalt der kleinen Breitschlitzdüse keilförmig gestaltet ist und über seine Länge von einer vorgegebenen Spaltbreite auf O abnimmt, wobei jedoch die Breitschlitzdüse so gestaltet ist, daß der Teilschmelzestrom über die ganze Länge des Düsenaustrittsspaltes die gleiche Austrittsgeschwindigkeit erhält. Gemäß der Erfindung ist der Düsenaustrittsspalt einstellbar ausgebildet, beispielsweise durch eine entsprechende Verstellbarkeit der Düsenplatte z. B. mittels Schrauben, Beilegscheiben u.ä.

Eine bevorzugte Ausbildung der Vorrichtung nach der Erfindung zum Herstellen von Farbstreifen unterschiedlicher Farbintensität in einem Schmelzestrom, wobei eine Folie mit einem farblosen Folienbereich und einem gefärbten Folienbereich und einem Übergangsbereich hergestellt wird, sieht vor, daß zwei Breitschlitzwerkzeuge gleicher Geometrie ggf. unterschiedlicher Düsenbreite, die je von einem Extruder mit einem Schmelzestrom gespeist werden, so nebeneinander angeordnet und verbunden sind, daß ein durchgehender Düsenaustrittsspalt mit einer aus den einzelnen Düsenbreiten summierten Breite vorhanden ist und die als Breitschlitzdüse ausgestaltete Einspritzöffnung ausgehend von der Übergangslinie der nebeneinander angeordneten Breitschlitzwerkzeuge über eine gewünschte Breite in einen Teilbereich des einen Breitschlitzwerkzeuges hineinragt und über einen Zufuhrkanal mit dem Schmelzestrom des anderen Breitschlitzwerkzeuges verbunden ist.

Das bevorzugte Anwendungsgebiet für die Erfindung ist das Herstellen von Folien auf Basis Polyvinylbutyral die als Zwischenfolien für Sicherheitsglas im Kraftfahrzeugwesen und Bauwesen benutzt werden.

Die Erfindung wird in der Zeichnung an einem Ausführungsbeispiel näher erläutert.

Es zeigen

Figur 1 einen Querschnitt durch ein bekanntes Breitschlitzwerkzeug,

Figur 2 die Ansicht A auf den Fließquerschnitt des Breitschlitzwerkzeuges nach Fig. 1 in schematischer Darstellung,

Figur 3 die Aufsicht auf einen Fließquerschnitt zweier nebeneinander angeordneter Breitschlitzwerkzeuge in schematischer Darstellung,

Figur 4 den Querschnitt durch eine Folie mit farblosem, gefärbtem und Übergangsbereich,

Figur 5 die schematische Aufsicht auf eine Anlage zum Herstellen einer Folie gem. Fig. 4,

Figur 6 die ausschnittsweise Aufsicht auf die geöffneten Breitschlitzwerkzeuge gem. Figur 5 im Bereich des Zuführens des Teilstromes für den Farbstreifen,

Figur 7 die Ansicht des Querschnittes BB nach Figur 6,

Figur 8 den Querschnitt der Breitschlitzdüse aus Staubalken und Düsenplatte gem. Figur 7,

Figur 9 die Ansicht von oben auf die Breitschlitzdüse nach Figur 8,

Figur 10 die Ansicht auf die Düsenplatte dem. Schnitt CC nach Figur 9 und

Figur 11 die Ansicht E auf die Breitschlitzdüse nach Fig. 8.

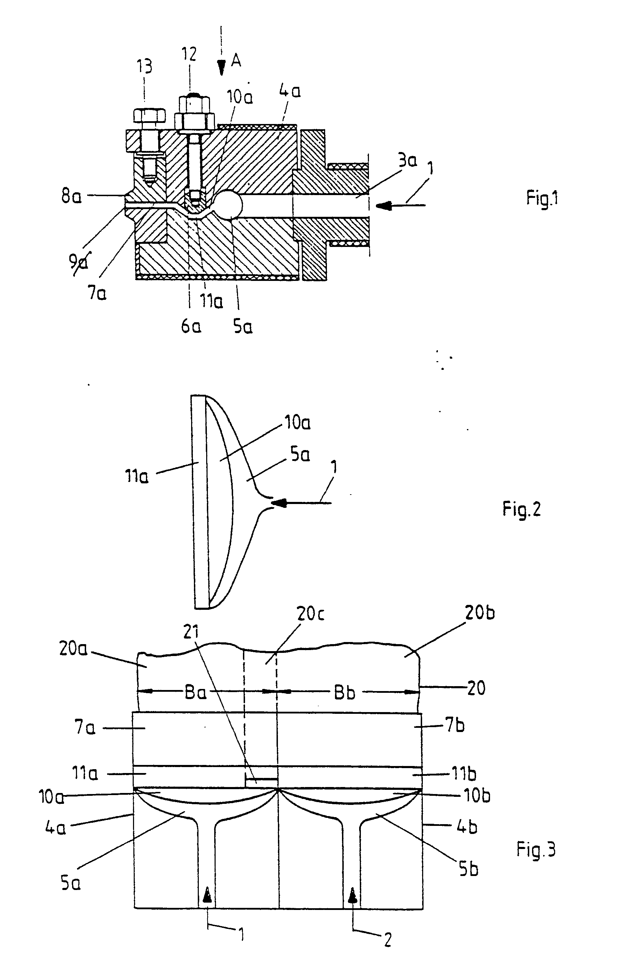

Nach Figur 1 ist schematisch ein Breitschlitzwerkzeug 4a dargestellt, bei dem der von dem Extruder kommende Schmelzestrom 1 in den Zufuhrkanal 3a eintritt und dann über den Verteilerkanal 5a auf die gewünschte Breite aufgeteilt wird. An den Verteilerkanal 5a schließt sich das Drosselfeld, ein Kanal mit konstanter Spalthöhe bei entsprechend dem Massedruck abnehmender Spaltlänge an, in dem der Materialfluß beherrscht wird und am Ende dessen er in die Vorlaufzone 11a im Bereich des Staubalkens 6a und anschließend in die Düsenaustrittszone 7a übergeht. Durch Verstellen des Staubalkens mittels der Zug- und Druckschrauben 12 können entsprechende Fließkorrekturen in diesem Bereich vorgenommen werden, analoges gilt für den Bereich der Düsenaustrittszone, der über die verstellbare Oberlippe 8a mittels der Schraube 13 ebenfalls einstellbar ist. Am Düsenaustrittsspalt 9 verläßt dann die geformte Schmelze das Breitschlitzwerkzeug.

In der Figur 2 ist die schematische Ansicht der Ausbildung des Fließkanalquerschnittes vom Eintritt der Schmelze über den Verteilerkanal 5a, das Drosselfeld 10a und die Vorlaufzone 11a im Bereich des Staubalkens dargestellt.

Gemäß der Erfindung ist es möglich, zwei große Breitschlitzwerkzeuge in der Weise auszubilden und aneinanderzukoppeln, daß eine überbreite Folie aus gleichartigem oder unterschiedlichem gleichgefärbtem oder unterschiedlich gefärbtem Kunststoff herstellbar ist. Wesentlich ist hierbei, daß die Breitschlitzwerkzeuge 4a, 4b die gleiche Geometrie in Bezug auf die Fließquerschnittgestaltung aufweisen, jedoch unterschiedliche Breite Ba, Bb aufweisen können. Die Schmelzen 1 und 2 sind bevorzugt auf gleicher thermoplastischer Kunststoffbasis, jedoch unterschiedlichen Einfärbung bzw. farblos und eingefärbt. Entsprechend sind dann die Folienbereich 20a, 20b ausgebildet und zu einer einheitlichen Folie 20 vereinigt. Zur Ausbildung des Farbstreifenbereiches 20c in der Folie 20 ist der Einsatz einer gesonderten Breitschlitzdüse 21 in eines der Breitschlitzwerkzeuge 4a, 4b, in dem Beispiel nach Figur 3, das Breitschlitzwerkzeug 4a vorgesehen. Bevorzugt ist die Breitschlitzdüse 21 im Übergangsbereich von einem Werkzeug 4a zum anderen Werkzeug 4b vorgesehen, dies richtet sich jedoch ausschließlich nach der gewünschten Anordnung und Ausgestaltung des Farbstreifenbereiches 20c.

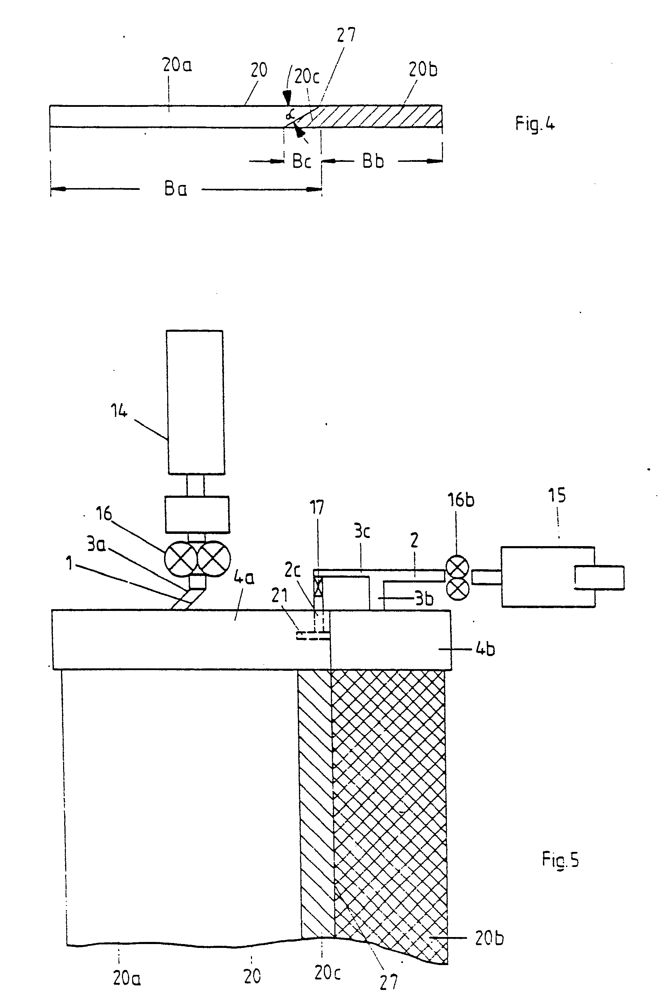

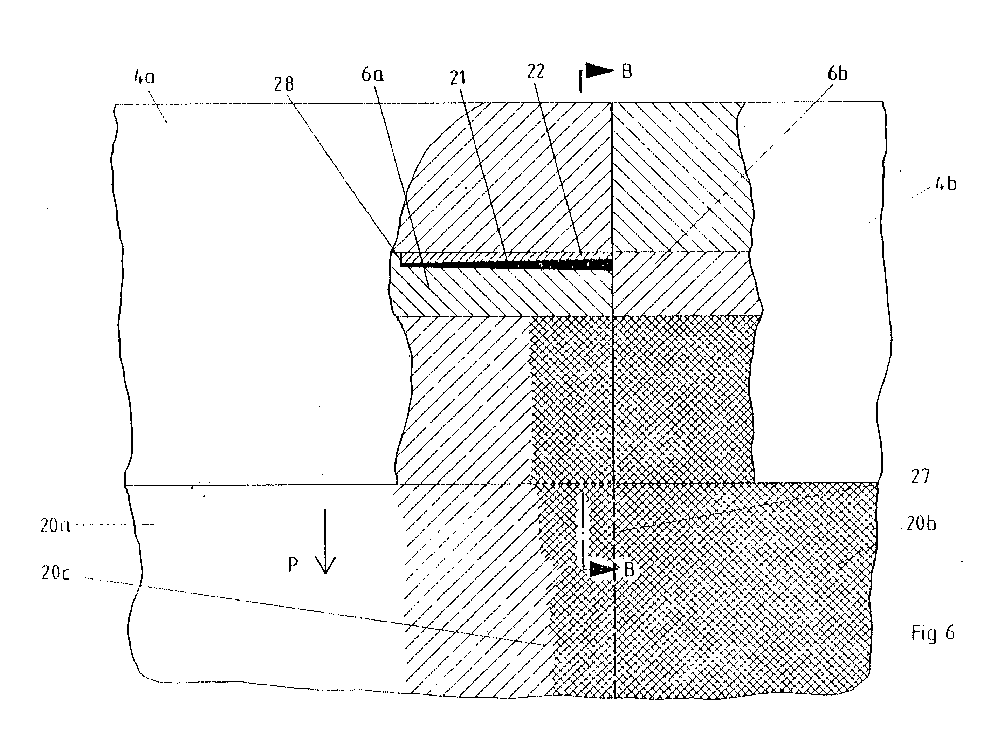

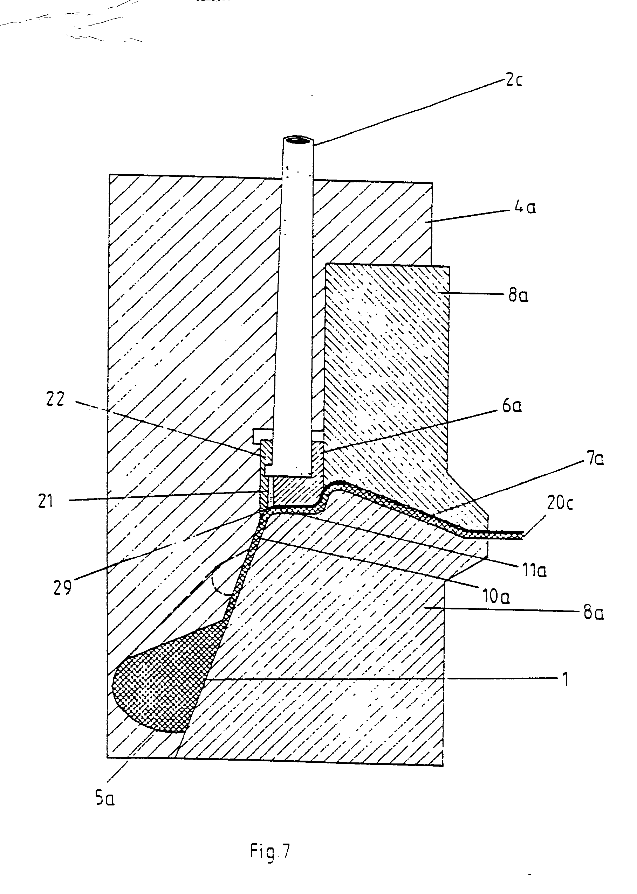

In der Figur 4 ist eine bevorzugte Ausbildung einer Folie insbesondere auf Basis von Polyvinylbutyral, die durch Extrusion hergestellt wird mit einem Farbstreifen im Querschnitt dargestellt. Hierbei wird eine Folie 20 mit der Breite Ba + Bb hergestellt, die einen farblosen Bereich 20a und einen durchgefärbten Bereich 20b aufweist. Im Übergangsbereich der gefärbten Folie 20b zur ungefärbten Folie 20a von der Übergangslinie 27 aus gesehen ist ein Farbstreifen mit in Richtung auf die farblose Folie abnehmender Farbintensität vorgesehen, daß ist der Folienbereich 20c, der bevorzugt keilförmig unter dem Winkel α, in einem Winkelbereich von bevorzugt 3 bis 20° verläuft. Entsprechend diesem Folienbereich mit Farbstreifen 20c, der eine Breite Bc aufweist, sind die zugehörigen Extrusionswerkzeuge ausgebildet, wie schematisch aus der Anlage nach Figur 5 beispielhaft hervorgeht. Hierbei wird der farblose Schmelzestrom 1 mittels des Extruders 14 plastifiziert und über Schmelzepumpen, den Zufuhrkanal 3a, dem ersten Breitschlitzwerkzeug 4a zugeführt. In dem zweiten Extruder 15 wird die farbige Kunststoffschmelze 2 aufgeschmolzen und mittels der Schmelzepumpen 16b, den Zufuhrkanal 3b, dem zweiten Breitschlitzwerkzeug 4b zugeführt. Von dem Schmelzestrom 2 wird ein Teilschmelzestrom 2c für den Farbstreifen über die Leitung 3c abgezweigt und beispielsweise mittels einer Schmelzepumpe 17 der in das Werkzeug 4a zusätzlich eingebauten Breitschlitzdüse 21 zugeführt zur Ausbildung des Farbstreifens 20c in der Folie 20.

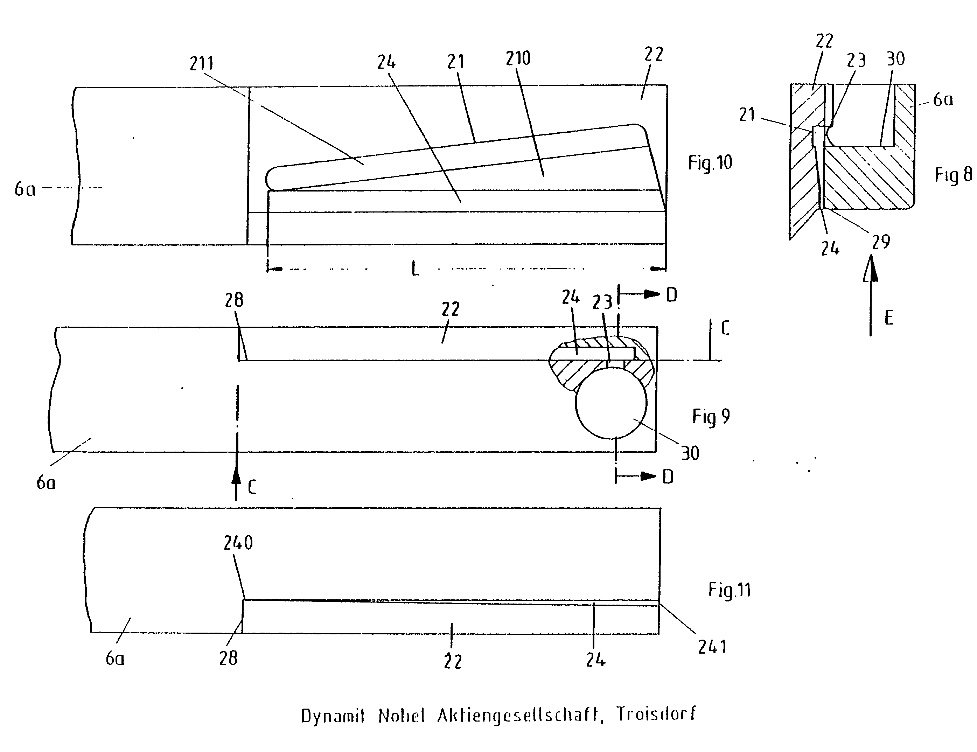

In den Figuren 6 und 7 ist die Ausbildung der Breitschlitzdüse 21 und deren Einbau in das große Breitschlitzwerkzeug 4a näher ausschnittsweise dargestellt. Aus der Aufsicht nach Fig. 6 geht hervor, wie die Breitschlitzwerkzeuge 4a für die farblose Folie 20a und das Breitschlitzwerkzeug 4b für die farbige Folie 20b direkt nebeneinander ineinander übergehend angeordnet sind, wobei die Berührungsfläche der Werkzeuge 4a, 4b zugleich die Übergangslinie 27 zwischen den beiden Folienbereichen 20a, 20b bildet. Der Pfeil P deutet die Extrusionsrichtung für die Folie 20 an, wobei in Extrusionsrichtung gesehen vor dem Staubalken 6a die zusätzliche Breitschlitzdüse 21 für das Einspritzen eines Teilstromes an farbiger Schmelze in den Bereich der farblosen Folie angeordnet ist. Hierzu kann der Staubalken 6a beispielsweise mit einer Ausnehmung 28 ausgebildet sein, in welche eine Düsenplatte 22 unter Ausbildung des Fließquerschnittes für die Breitschlitzdüse 21 eingesetzt ist. In der Fig. 7 ist dann die Ausbildung der Breitschlitzdüse 21 im Bereich des Werkzeuges 4a im vertikalen Querschnitt dargestellt. Die farblose Schmelze 1 kommt vom Verteilerkanal 5a und wird über das Drosselfeld gleichmäßig verteilt, so daß bei Eintritt in die Vorlaufzone 11a im Bereich des Staubalkens die farblose Schmelze 1 auf voller gewünschter Folienbreite parallel in Extrusionsrichtung läuft. An der Vorderkante 29 des Staubalkens 6a ist auf der gewünschten Breite der Düsenaustrittsspalt für den Teilschmelzestrom 2c, aus der Breitschlitzdüse 21 ausgebildet. Der Teilschmelzestrom 2c wird beispielsweise durch eine Ausnehmung in dem Staubalken 6a, dem Fließquerschnitt der Breitschlitzdüse 21 zugeführt. Der Fließquerschnitt der Breitschlitzdüse 21 wird durch die Düsenplatte 22 ausgebildet, die an der Vorderseite des Staubalkens unter entsprechender Belassung von Fließquerschnitten befestigt ist, beispielsweise mittels nicht dargestellter Schrauben.

In den Figuren 8 bis 11 ist eine beispielhafte Ausgestaltung der Breitschlitzdüse 21 zum Zuführen eines Teilschmelzestromes in einen in einer Breitschlitzdüse bereits verteilt fließenden Hauptschmelzestrom dargestellt. Die Figur 8 zeigt nochmals in vergrößerter Darstellung den Querschnitt durch den Staubalken 6a gemäß Figur 7, mit Ausnahmeöffnung 30 für die Zuführung des Schmelzestromes und Durchtrittsöffnung 23 in den Fließquerschnitt der Breitschlitzdüse 21. Der Fließquerschnitt der Breitschlitzdüse 21 wird zwischen der Vorderseite des Staubalkens 6a und der davor angebrachten Düsenplatte 22 gebildet, der Düsenaustrittsspalt 24 verläuft entlang der Kante 29 des Staubalkens 6a. In der Figur 9 ist eine Aufsicht auf Staubalken und Düsenplatte gem. Figur 8 gezeigt. Dabei geht auch hervor, daß es zweckmäßig ist, die Düsenplatte 22 in einer Ausnehmung 28 des Staubalkens 6a einzusetzen. Der Schnitt DD gemäß Fig. 9 entspricht dem Querschnitt nach Figur 9. In der Figur 10 ist die Ausarbeitung des Fließquerschnittes in der Düsenplatte 22 gemäß Schnitt CC nach Figur 9 dargestellt. Der Fließquerschnitt der Breitschlitzdüse 21 weist im wesentlichen den Verteilerkanal 211, den Damm 210, mit der Funktion eines Drosselfeldes und den Düsenaustrittsspalt 24 auf. Die Länge L des Düsenaustrittsspaltes 24 wird gewählt je nach der gewünschten Breite des eingespeisten Farbstreifens in der Folie.

Bevorzugt wird ein keilförmiger Düsenaustrittsspalt 24, wie aus der Figur 11 ersichtlich ist, wobei der Spalt keilförmig von der größten Breite 241 bis auf 0 an dem entgegengesetzten Ende 240 zuläuft. Bei einer solchen Gestaltung des Düsenaustrittsspaltes 24 ist eine einseitige Einspeisung wie in Figur 9 gezeigt, zweckmäßig.

Der erfindungsgemäße Einbau einer zusätzlichen Breitschlitzdüse in ein Breitschlitzwerkzeug zum Einführen einer farblich differierenden Schmelze zum Erzeugen eines Farbstreifens definierter Farbintensitäten und definierter Größen ist wie in dem gezeigten Beispiel möglich mit zwei aneinandergekoppelten Breitschlitzwerkzeugen jedoch auch bei Einsatz nur eines großen Breitschlitzwerkzeuges.

**Patentansprüche**

1. Verfahren zur Extrusion einer einen Farbstreifen (20c) mit unterschiedlicher Farbintensität aufweisenden Folie (20), bei dem ein erster Strom (1) eines geschmolzenen, thermoplastischen Kunststoffs nach Ausbreiten in Querrichtung zur Extrusionsrichtung (P) durch eine Breitschlitzdüse (4a) gepreßt und zu einer Folie (20) geformt wird, wobei in diesen ersten Schmelzestrom (1) vor dem Austritt aus der Düse (4a) ein Zusatzstrom geschmolzenen, thermoplastischen Kunststoffs eingespritzt wird, dadurch gekennzeichnet, daß
— das Einspritzen an einer Stelle erfolgt, an der sich der Schmelzestrom (1) bereits vollständig in Richtung quer zur Extrusionsrichtung ausgebreitet hat,
— wobei der eingespritzte Schmelzestrom (2c) einen keilförmigen Querschnitt aufweist und das Einspritzen senkrecht zur Extrusionsrichtung und unter entsprechender Verdrängung des ersten Schmelzestromes (1) erfolgt.

2. Verfahren nach Anspruch 1, dadurch gekennzeichnet, daß
— parallel zu dem ersten Schmelzestrom (1) ein weiterer Kunststoffschmelzestrom (2) quer zur Extrusionsrichtung ausgebreitet und zu einer Folie geformt wird,
— wobei der erste und der weitere Schmelzestrom anschließend zu einer Folie (20) entsprechender Breite verschmelzen
— und wobei das Einspritzen des Zusatzstromes (2c) im Übergangsbereich zwischen dem ersten Schmelzestrom (1) und dem weiteren Kunststoffschmelzestrom (2) erfolgt.

3. Verfahren nach Anspruch 2, dadurch gekennzeichnet, daß der erste und der weitere Schmelzestrom eine unterschiedliche Farbintensität aufweisen.

4. Vorrichtung zum Herstellen einer einen Farbstreifen (20c) enthaltenden Folie (20) zur Durchführung des Verfahrens nach Anspruch 1, mit einem Extruder (14) zum Aufschmelzen eines Stromes (1) eines thermoplastischen Kunststoffes und mit einem Breitschlitzwerkzeug (4a) mit einem Verteilerkanal (5a) und einer zwischen einer Oberlippe (8a) und Unterlippe gebildeten Düsenaustrittzone (7a) mit Düsenaustrittsspalt (9a) zum Formen der Folie, wobei das Breitschlitzwerkzeug (4a) noch eine Einspritzöffnung für einen weiteren thermoplastischen Teilschmelzestrom (2c) aufweist, dadurch gekennzeichnet, daß die Einspritzöffnung als in Extrusionsrichtung (P) betrachtet an der Vorderseite eines nach dem Verteilerkanal (5a) mit einem nachfolgenden Drosselfeld (10a) vorgesehenen Staubalken (6a) des Breitschlitzwerkzeuges (4a) angeordnete kleine Breitschlitzdüse (21) ausgebildet ist, die vom Staubalken (6a) und einer davor befestigten Düsenplatte (22) mit einem quer zur Extrusionsrichtung entlang der vorderen Kante des Staubalkens (6a) verlaufenden Düsenaustrittsspalt (24) gebildet wird.

5. Vorrichtung zum Herstellen einer einen Farbstreifen (20c) enthaltenden Folie (20) zur Durchführung des Verfahrens nach Anspruch 2 mit
— zwei, untereinander verbundenen Breitschlitzwerkzeugen (4a, ab), wobei
— dem einen Breitschlitzwerkzeug (4b) eine farbige (2) und dem anderen Breitschlitzwerkzeug (4a) eine ungefärbte Kunststoffschmelze (1) zuführbar ist,
— mit — für jedes Breitschlitzwerkzeug —
— einem Anschluß für die Zufuhr der Kunststoffschmelze (3a, 3b),
— einem Verteilerkanal (5a, 5b)
— und ggf. einem Staubalken (6a, 6b)
— und einem gemeinsamen, verstellbaren Düsenaustrittsspalt (9),
— sowie einer Einrichtung zum Einspritzen eines Teils der einem Kunststoffschmelze in den Strom der anderen Kunststoffschmelze,
— wobei das Einspritzen an einer Stelle erfolgt, an der sich die Schmelzeströme bereits vollständig in Richtung quer zur Extrusionsrichtung (P) ausgebreitet haben,
dadurch gekennzeichnet, daß

— die Einspritzeinrichtung als zusätzliche, kleinere Breitschlitzdüse (21) ausgebildet ist, mit

— einem sich keilförmig über seine Länge verengenden Austrittsspal (24),

— wobei die zusätzliche Breitschlitzdüse (21) im Übergangsbereich von dem einen Breitschlitzwerkzeug (4b) zum anderen Breitschlitzwerkzeug (4a) so angeordnet ist,

— daß der Austrittsspalt (24) der zusätzlichen Breitschlitzdüse (21) quer zur Extrusionsrichtung (P) ausgerichtet ist und

— sich keilförmig in den Fluß des einen Schmelzestromes (1) und

— senkrecht zu dessen Flußrichtung (P) erstreckt.

6. Vorrichtung nach einem der Ansprüche 4 und 5, dadurch gekennzeichnet, daß der Austrittsspalt (24) der zusätzlichen Breitschlitzdüse (21) verstellbar ausgebildet ist.

7. Vorrichtung nach einem der Ansprüche 4 bis 6, dadurch gekennzeichnet, daß der Staubalken (6a) eine Einspeisebohrung (28) mit einer Verbindungsbohrung (23) zur Breitschlitzdüse (21) für den Teilschmelzestrom (2c) aufweist.

8. Vorrichtung nach einem der Ansprüche 4 bis 7, dadurch gekennzeichnet, daß die Breitschlitzdüse (21) einseitig in die Düsenplatte (22) mit einem Verteilerkanal (211), einem Damm (210) und einem Düsenaustrittsspalt (24) eingearbeitet ist.

9. Vorrichtung nach einem der Ansprüche 4 bis 8, dadurch gekennzeichnet, daß der Düsenaustrittsspalt (24) keilförmig gestaltet ist und über seine Länge L von einer vorgegebenen Spaltbreite auf 0 abnimmt, wobei jedoch die Breitschlitzdüse (21) so gestaltet ist, daß der Teilschmelzestrom über die ganze Länge des Düsenaustrittsspaltes (24) die gleiche Austrittsgeschwindigkeit erhält.

**Claims**

1. Process for the extrusion of a foil (20) possessing a coloured strip with variable colour intensity, in which a first flow (1) of a molten thermoplastic synthetic resin is extruded through a wide slit nozzle (4a) after widening out in the transverse direction to the extrusion direction (P) ans is shaped to a foil (20), with an additional flow of molten thermoplastic synthetic resin being injected into this first melt flow (1) before the latter leaves the nozzle (4a), characterised in that

— the injection takes place at a position at which the melt flow (1) has already widened out completely in the direction transverse to the extrusion direction,

— with the injected melt flow (2c) possessing a wedge-shaped cross-section and the injection taking place at right angles to the extrusion direction and with corresponding constriction of the first melt flow (1).

2. Process according to claim 1, characterised in that

— parallel to the first melt flow (1) a further synthetic resin melt flow (2) widens out transverse to the extrusion direction and is shaped into a foil,

— with the first melt flow and the further melt flow then being fixed together to a foil (20) of corresponding width

— and with the injection of the additional flow (2c) taking place in the transition region between the first melt flow (1) and the further synthetic resin melt flow (2).

3. Process according to claim 2, characterised in that the first melt flow and the further melt flow possess a different colour intensity.

4. Apparatus for the production of a foil (20) containing a coloured strip (20c), for carrying out of the process according to claim 1, with an extruder (14) for the melting of a flow (1) of a thermoplastic synthetic resin and having a wide slit tool (4a) with a distribution channel (5a) and a nozzle outflow zone (7a) with nozzle outflow gap (9a) for the shaping of the foil, formed between an upper lip (8a) and lower lip, wherein the wide slit tool (4a) possesses a further injection opening for a further thermoplastic component melt flow (2c), characterised in that the injection opening is formed as small wide slit nozzle (21) arranged, seen in the extrusion direction (P), on the forward side of a damming bar (6a) of the wide slit tool (4a) which is provided with a following throttling zone (10a) after the distribution channel (5a), which wide slit nozzle (21) is formed by the damming bar (6a) and a nozzle plate (22) with a nozzle outflow gap (24) extending transverse to the extrusion direction along the forward edge of the damming bar (6a) secured in front of the damming bar.

5. Apparatus for the production of a foil (20) containing a coloured strip (20c) for carrying out of the process according to claim 2 with

— two wide slit tools (4a, 4b) connected one below the other, wherein

— a coloured synthetic resin melt (2) can be supplied to the wide slit tool (4b) and an uncoloured synthetic resin melt (1) can be supplied to the other wide slit tool (4a),

— whit — for each wide slit tool —

— a connection for the supply of the synthetic resin melts (3a, 3b),

— a distribution channel (5a, 5b)

— and optionally a damming bar (6a, 6b)

— and with a common adjustable nozzle outflow gap (9),

— as well as an arrangement for the injection of one part of the one synthetic resin melt into the flow of the other synthetic resin melt,

— wherein the injection takes place at a position at which the melt flows have already widened out completely in the direction transverse to the extrusion direction (P),
characterised in that

— the injection arrangement is formed as additional, smaller wide slit nozzle (21), with

— an outlow gap (24) narrowing in the shape of a wedge over the course of its length,

— with the additional wide slit nozzle (21) being so arranged in the transition region from the one wide slit tool (4b) to the other wide slit tool (4a),

— that the outflow gap (24) of the additional wide slit nozzle (21) is aligned transverse to the extrusion direction (P) and

— extends in the form of a wedge into the flow of the one melt flow (1) and

— extends at right angles to its flow direction (P).

6. Apparatus according to one of claims 4 and 5, characterised in that the outflow gap (24) of the additional wide slit nozzle (21) is formed so as to be adjustable.

7. Apparatus according to one of claims 4 to 6, characterised in that the damming bar (6a) possesses a feed passage (28) with a connecting passage (23) to the wide slit nozzle (21) for the component melt flow (2c).

8. Apparatus according to one of claims 4 to 7, characterised in that the wide slit nozzle (21) is incorporated on one side in the nozzle plate (22) with a distribution channel (211), a dam (210) and a nozzle outflow gap (24).

9. Apparatus according to one of claims 4 to 8, characterised in that the nozzle outflow gap (24) is formed in the shape of a wedge and diminishes over its length L from a provided gap width to 0, with however the wide slit nozzle (21) being so formed that the component melt flow attains the same outflow speed over the entire length of the nozzle outflow gap (24).

**Revendications**

1. Procédé pour l'extrusion d'une feuille (20) présentant une bande colorée (20c) à intensité de couleur distincte, dans lequel on fait passer par une filière plate (4a), après extension dans le sens transversal par rapport au sens (P) de l'extrusion, un premier courant (1) d'une matière synthétique thermoplastique fondue, et on le met sous forme d'une feuille (20), en injectant un courant additionnel de matière synthétique thermoplastique fondue dans ce premier courant (1) de matière fondue, avant la sortie de la filière (4a), caractérisé en ce que :

— l'injection est effectuée en un point en lequel le courant (1) de matière fondue s'est déjà étendu complètement dans le sens transversal par rapport au sens de l'extrusion,

— le courant injecté (2c) de matière fondue présente une section transversale en forme de coin et l'injection est effectuée perpendiculairement au sens de l'extrusion et avec un déplacement correspondant du premier courant (1) de matière fondue.

2. Procédé selon la revendication 1, caractérisé en ce que :

— parallèlement au premier courant (1) de matière fondue, un autre courant de matière plastique fondue (2) est étendu perpendiculairement au sens de l'extrusion, et mis en forme d'une feuille,

— le premier courant de matière fondue et l'autre courant de matière fondue sont ensuite fondus en une feuille (20) de largeur correspondante, et

— l'injection du courant additionnel (2c) est effectuée dans la zone de passage entre le premier courant (1) de matière fondue et l'autre courant de matière plastique fondue (2).

3. Procédé selon la revendication 2, caractérisé en ce que le premier courant de matière fondue présente une intensité de couleur différente de celle de l'autre courant de matière fondue.

4. Dispositif pour la fabrication d'une feuille (20) contenant une bande colorée (20c), pour la mise en œuvre du procédé selon la revendication 1, comprenant une extrudeuse (14) pour la fusion d'un courant (1) d'une matière synthétique thermoplastique et un outil à filière plate (4a) comportant un canal de distribution (5a) et une zone de sortie de filière (7a) formée entre une lèvre supérieure (8a) et une lèbre inférieure, comportant une fente de sortie de filière (9a) pour le formage de la feuille, l'outil à filière plate (4a) présentant en outre un orifice d'injection pour un autre courant partiel (2c) de matière thermoplastique fondue, caractérisé en ce que l'orifice d'injection a la forme d'une petite filière plate (21) disposée, vu dans le sens (P) de l'extrusion, sur la face avant d'une barre d'étranglement (6a) de l'outil à filière plate (4a), barre d'étranglement disposée après le canal de distribution (5a) avec une partie en étranglement (10a) y faisant suite, petite filière plate formée par la barre d'étranglement (6a) et une plaque de filière (22) fixée en avant de celle-ci, avec une fente (24) de sortie de filière s'étendant le long du bord avant de la barre d'étranglement (6a), transversalement par rapport au sens de l'extrusion.

5. Dispositif pour la fabrication d'une feuille (20) contenant une bande colorée (20c), pour la mise en œuvre du procédé selon la revendication 2, avec :

— deux outils à filière plate assemblés (4a, ab),

— permettant d'amener à un outil à filière plate (4b) une matière plastique fondue colorée (2), et à l'autre outil à filière plate (4a) une matière plastique non colorée (1), comportant, pour chaque outil à filière plate,

— un raccordement (3a, 3b) pour l'arrivée de la matière plastique fondue,

— un canal de distribution (5a, 5b) et

— éventuellement une barre d'étranglement (6a, 6b) et une fente commune, réglable (9) de sortie de la filière,

— ainsi qu'un dispositif pour l'injection d'une partie d'une matière plastique fondue dans le courant de l'autre matière plastique fondue,

— l'injection étant effectuée en un point en lequel les flux de matière fondue sont déjà complètement étendus dans le sens transversal par rapport au sens (P) de l'extrusion, caractérisé en ce que :

— le dispositif d'injection a la configuration d'une petite filière plate supplémentaire (21), comportant :

— une fente de sortie (24) en forme de coin, se rétrécissant sur sa longueur,

— la filière plate supplémentaire (21) étant disposée dans la zone de passage d'un outil à filière plate (4b) à l'autre outil à filière plate (4a), de telle manière que :

— la fente de sortie (24) de la filière plate supplémentaire (21) est orientée transversalement par rapport au sens (P) de l'extrusion et s'etend en forme de coin dans le flux d'un courant (1) de matière fondue et transversalement par rapport au sens (P) d'écoulement de celui-ci.

6. Dispositif selon l'une des revendications 4 et 5, caractérisé en ce que la fente de sortie (24) de la filière plate supplémentaire (21) est réglable.

7. Dispositif selon l'une des revendications 4 à 6, caractérisé qne ce que la barre d'étranglement (6a) présente un alésage d'alimentation (28) avec un alésage de raccordement (23) conduisant à la filière plate (21) pour le courant partiel (2c) de matière fondue.

8. Dispositif selon l'une des revendications 4 à 7, caractérisé en ce que la filière plate (21) est incorporée d'un côté dans la plaque de filière (22), comportant un canal de distribution (211), une plaque de séparation (210) et une fente de sortie (24) de la filière.

9. Dispositif selon l'une des revendications 4 à 8, caractérisé en ce que la fente de sortie (24) de la filière a une forme de coin et va en se rétrécissant, sur sa longueur L, d'une largeur de fente préétablie à zéro, la filière plate (21) ayant toutefois une forme telle que le courant partiel de matière fondue parvient à la même vitesse de sortie sur toute la longueur de la fente de sortie (24) de la filière.

Fig.1

Fig.2

Fig.3

Fig. 4

Fig. 5

Fig 6

Fig.7

Fig 8

Fig.10

Fig 9

Fig.11

Dynamit Nobel Aktiengesellschaft, Troisdorf